# EUROPÄISCHE PATENTSCHRIFT

(11) **EP 1 368 676 B1**
(45) Veröffentlichungstag und Bekanntmachung des Hinweises auf die Patenterteilung: **25.10.2006**
(21) Anmeldenummer: 02709957.1
(22) Anmeldetag: 11.02.2002
(51) Int. Cl.: G02B 1/10, G02B 5/28, G02B 5/08, G02B 26/08

(54) **OPTISCHES BAUTEIL UND HERSTELLUNG EINES SOLCHEN**
OPTICAL COMPONENT AND PRODUCTION THEREOF
COMPOSANT OPTIQUE ET FABRICATION DUDIT COMPOSANT

(30) Priorität: 02.03.2001 CH 401012001
(43) Veröffentlichungstag der Anmeldung: 10.12.2003
(73) Patentinhaber: OC Oerlikon Balzers AG, 9496 Balzers (LI)
(72) Erfinder: THULI, Thomas, CH-8889 Plons (CH); SCHRAUF, Stefan, A-6805 Feldkirch-Gisingen (AT); GOOD, Heinz, CH-7000 Chur (CH)
(86) Internationale Anmeldenummer: PCT/CH2002/000079
(87) Internationale Veröffentlichungsnummer: WO 2002/071107

(56) Entgegenhaltungen:
- EP-A- 0 949 648
- EP-A- 0 969 306
- WO-A1-94/04951
- DE-A- 3 703 087
- US-A- 5 250 321
- US-A- 6 076 933

## Beschreibung

Die Erfindung betrifft ein optisches Bauteil nach Oberbegriff des Anspruchs 1 und ein Herstellverfahren für ein optisches Bauteil nach Anspruch 9.

Optische Bauteile werden vielfach beispielsweise im Bereich der Telekommunikationsanwendung eingesetzt. Solche Bauteile können als feste Komponenten ausgebildet sein, welche eine optische Funktion ausüben und dazu mindestens eine optisch funktionelle Oberfläche enthalten. Solche Bauteile können aber auch bewegliche Teile enthalten und müssen dann zusätzlich mechanischen Anforderungen genügen. Ein typischer Anwendungsbereich, wo mechanisch bewegliche Elemente benötigt werden, ist beispielsweise der optomechanische Schalter, der oft bei Telekommunikationsanwendungen eingesetzt wird. Üblicherweise werden an solche Bauteile hohe Anforderungen in Bezug auf die Präzision der Funktion und somit an die Herstellgenauigkeit gestellt. In vielen Fällen werden speziell hohe Anforderungen an die Einhaltung der zu erzielenden Reflexionscharakteristiken und an die Winkeltoleranzen gestellt.

Wie dies aus dem Stand der Technik bekannt ist können solche Komponenten aus einem Leichtmetall einstückig gearbeitet werden wenn die optischen Oberfläche eine spiegelnde Fläche sein soll. Dabei kann eine plane Spiegeloberfläche in dem dafür vorgesehenen Bereich erstellt und beispielsweise hochglanzpoliert werden. Es muss die Spiegeloberfläche besonders gut, d.h. plan und mit geringer Oberflächenrauhigkeit gearbeitet sein, um Streulichtverluste zu vermeiden, zumal im allgemeinen recht kleine Spiegel ausgearbeitet werden, mit beispielsweise typischen Flächen von 3x10mm^2 oder kleiner. Die Herstellung derartiger Spiegel benötigt relativ aufwendige metallverarbeitende Prozesse, wie z.B. Diamantdrehen, um die notwendige Oberflächengüte und Oberflächenpräzision zu erreichen. Dies macht die Herstellung relativ teuer und vergrössert ggf. auch die Ausschussrate.

Um diesen Nachteil zu umgehen wird im deutschen Gebrauchsmuster DE 20010594 U ein mechanischer optischer Schalter beschrieben bei dem die Komponente aus einem Basiskörper ohne optisch funktionelle Oberfläche und daran angebracht ein Glassubstrat mit optisch funktioneller Oberfläche besteht. Damit können mittels bekannter Polierverfahren hochwertige Glasoberflächen kostengünstig hergestellt werden und eine aufwendige Metallbearbeitung zur Herstellung der Komponenten entfällt. Es wird auf ausgereifte bekannte Verfahren verwiesen wie solche Glaskörper mit einer hoch reflektierenden, optisch sehr guten Spiegelschicht versehen werden. Auf diese Weise, so wird erläutert, gelingt es also Politur, Reinigung und Beschichtung auf Glassubstraten zu realisieren wobei in einer Weiterbildung der Erfindung die Möglichkeit zur Beschichtung grosser Glassubstrate erläutert wird. Üblicherweise werden nämlich in der Dünnfilmtechnik bevorzugt grosse Substrate beschichtet um diese nach der Beschichtung in eine Vielzahl kleinerer Komponenten auf ihr Endmass zu vereinzeln. Für diese Vorgehensweise spricht die Tatsache, dass beim Be- und Entladen der Beschichtungsanlagen mit grossen Substraten weniger Handgriffe notwendig sind und damit die Beschichtungsanlage schneller beladen werden kann. Ausserdem muss jedes Substrat durch eine Haltevorrichtung aufgenommen werden. Das dafür notwendige Werkzeug ist bei grossen Substraten einfacher zu realisieren. Jeder dieser Halter hat eine geometrische Ausdehnung und nimmt daher in der Beschichtungsanlage eine Fläche ein, die nicht zur Beschichtung von Substraten genutzt werden kann. Werden für kleine Substrate eine Vielzahl von Halter benötigt so nehmen diese in der Regel in der Summe viel Fläche in Anspruch. Aus diesem Grund ist die beschichtete Substratfläche teilweise um Faktoren grösser wenn auf grosse Substrate beschichtet werden kann.
Vorteil der im Gebrauchsmuster erläuterten Vorgehensweise ist die Entkopplung der Verspiegelung vom Basiskörper. Die Herstellung des Basiskörpers wird daher einfacher und damit effizienter und wirtschaftlicher. Diese Entkopplung hat allerdings den Nachteil, dass die bereits beschichteten Substrate noch auf ihr Endmass vereinzelt und auf den Basiskörper assembliert werden müssen. Unter Assemblieren verstehen wir hierbei das Zusammenfügen zweier oder mehrerer Teile zu einer Komponente, die dann auch Assembly genannt wird. Mit der Assemblierung sind in der Regel eine Vielzahl von Handlingschritten verbunden, wobei unter Handling das Greifen, Transportieren, Umlagern und ganz allgemein der Umgang mit Teilen verstanden wird. In einigen Fällen müssen Schichtsysteme appliziert werden die lediglich eine geringe Stabilität gegenüber mechanischen oder chemischen Einflüssen aufweisen. Dies ist insbesondere dann von Nachteil, wenn sich solche Einflüsse aufgrund des Assemblierens nicht oder nur mit Aufwand vermeiden lassen oder wenn das Assemblieren eine weitere Reinigung sinnvoll macht. Nimmt die Beschichtung schaden so ist natürlich die optische Komponente von minderer Qualität und im Zweifelsfall nicht mehr zu gebrauchen.

Es ist die Aufgabe der vorliegenden Erfindung die Nachteile des Stand der Technik zu beseitigen. Es ist insbesondere die Aufgabe ein optisches Bauteil derart auszubilden, dass Handlings- und Assemblierprobleme vermieden oder vermindert werden können bei Einhaltung der geforderten hohen optischen Präzision des Bauteils, wobei das Herstellverfahren eine hohe Wirtschaftlichkeit erlauben soll.

Erfindungsgemäss wird die Aufgabe gelöst durch vorgehen nach den Ansprüchen 1 und 8. Die Unteransprüche beziehen sich auf vorteilhafte weitere Ausgestaltungen.

Die Beschichtung der die optisch funktionelle Oberfläche tragenden Substrate wird durch das erfindungsgemässe Vorgehen möglichst weit ans Ende der Prozesskette verlagert, dadurch dass nicht nur die Substrate beschichtet werden, sondern die bereits assemblierte Komponente als Ganzes. In der Übersicht sieht das Herstellungsverfahren für das optische Bauteil demnach folgende Schritte vor:
a) anfertigen eines Basiskörper,
b) anfertigen eines Substrates mit optischer Oberfläche,
c) zusammenfügen des Substrates mit dem Basiskörper zu einer Komponente, vorzugsweise durch kitten,
d) beschichten der Komponente zusammen mit der optischen Oberfläche des Substrates mit einem Vakuumbeschichtungsverfahren.

Es entsteht dadurch ein optisches Bauteil das ein Basiskörper enthält mit einem daran angeordneten Substrat welches mindestens in einem Substratbereich eine optisch funktionelle Oberfläche mit einer Beschichtung aufweist derart, dass sich die Beschichtung wenigstens teilweise über das Substrat hinaus auf den Basiskörper erstreckt. Hierbei sind insbesondere optisch funktionelle Oberflächen, Oberflächen bei denen bei Lichteinfall entsprechend der optischen Funktion das Licht reflektiert, transmittiert, absorbiert, gebrochen oder gebeugt wird. Entsprechend kann es sich bei der optisch funktionellen Oberfläche um einen Spiegel, einen Farbfilter, um einen Polarisationsstrahlteiler, um eine Linse oder ganz allgemein um eine Beugungsstruktur handeln. In vielen Fällen sind unbeschichtete Substrate weniger empfindlich gegenüber mechanischen oder chemischen Einflüssen als beschichtete Substrate. Ein unbeschichtetes Substrat kann daher mittels einer präzise gearbeiteten mechanische Assemblierungsanordnung assembliert werden. Dabei können die optisch funktionelle Oberfläche des Substrates und eine Referenz am Basiskörper relativ zueinander in vorgegebener Weise angeordnet, insbesondere präzise orientiert werden. Beim optischen Bauteil ist also der Substratbereich bezogen auf eine am Basiskörper vorgesehene Referenz in vorgegebener Weise angeordnet. Vorzugsweise besteht diese Referenz aus zwei planen Referenzflächen. Basiskörper und Substrat werden vorzugsweise miteinander verkittet. Die Orientierung wird durch die Kittschicht, die den Basiskörper mit dem Substrat verbindet, fixiert, wobei diese Kittschicht in der Lage ist einen Dickenverlauf des Zwischenraumes zwischen Substrat und Basiskörper auszugleichen. Die genaue Geometrie der Bereiche am Substrat und am Basiskörper, die miteinander verbunden werden sollen, spielt daher für die Orientierung keine Rolle. Entsprechend vereinfacht ist die Herstellung sowohl des Substrats als auch des Basiskörpers.

Die Erfindung wird anschliessend beispielsweise und anhand von schematischen Figuren und Beispielen erläutert. Die Figuren zeigen:
- Fig.1a: ein erfindungsgemässes optisches Bauteil im Querschnitt.
- Fig .1b: eine mögliche Ausführung des optischen Bauteils in der Draufsicht.
- Fig.2a: eine Assemblierungsanordnung für das Bauteil im Querschnitt.
- Fig.2b: eine Draufsicht der Assemblierungsanordnung gemäss Fig.2a.
- Fig.3a: einen optischen Schalter dessen bewegliches Teil aus einem erfindungsgemässen optischen Bauteil besteht.
- Fig.3b: Funktionsweise des optischen Schalters gemäss Fig. 3a schematisch dargestellt.
- Fig.4a: drei verschiedene Ausführungen von Substratoberflächen: (i) plane Oberfläche, (ii) Oberfläche mit periodischer Gitterstruktur versehen, (iii) Oberfläche mit Fresnellinse versehen.
- Fig.4b: drei Oberflächen gemäss Fig. 4a nachdem sie mit einer Beschichtung versehen wurden.

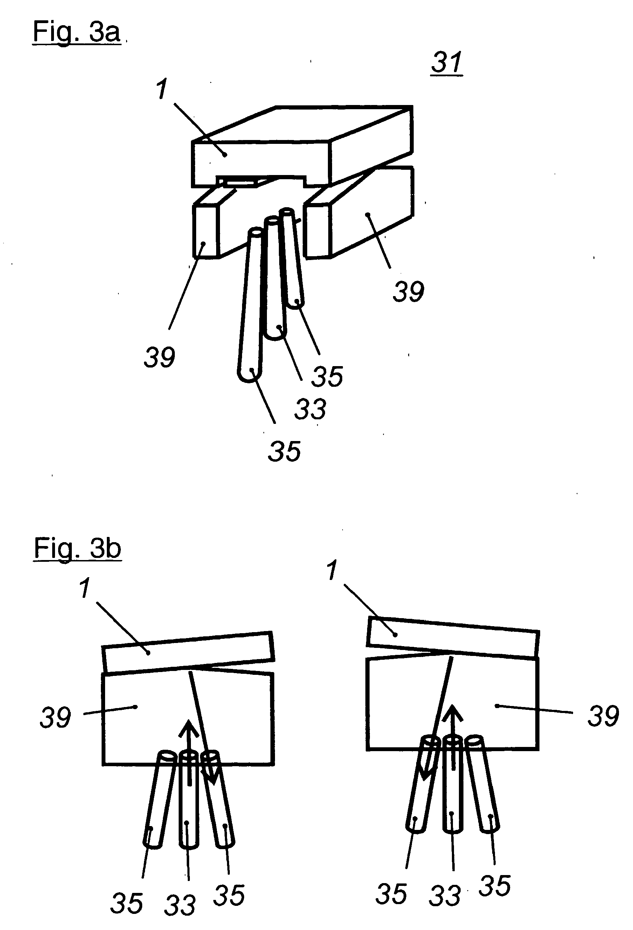

Im Beispiel wird die Herstellung eines erfindungsgemässen optischen Bauteils 1 das das bewegliche Teil eines optischen Schalter 31 bildet, beschrieben. Das optische Bauteil 1 wird dabei beweglich auf den dachförmigen Stützen 39 des Schalters 31 gelagert. Ein solcher Schalter 31 ist in der Fig. 3a dargestellt. In der Telekommunikationsanwendung wird ein solcher Schalters 31 eingesetzt um Licht, das aus einem ersten Lichtleiter 33 austritt, wahlweise in einem der zu beiden Seiten des ersten Lichtleiters angeordneten weiteren Lichtleiter 35 umzulenken. Diese Funktion ist schematisch in Fig. 3b dargestellt.

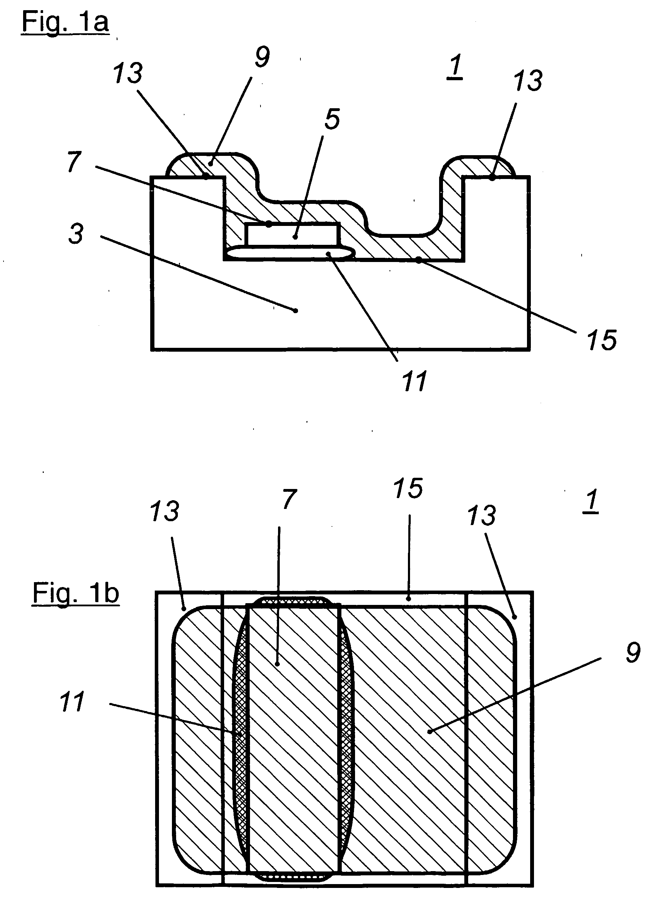

Weitere Details des für den Schalter 31 benötigten erfindungsgemässen optischen Bauteils 1 sind in der Figur 1a im Querschnitt gezeigt. Den Basiskörper 3 bildet ein U-förmiges Materialstück. Aufgrund der einfachen Bearbeitung kommt hier zum Beispiel Aluminium in Frage, es sind aber auch andere Materialien insbesondere Kunststoffe einsetzbar. Auf den Basiskörper 3 wird ein Substrat 5 aufgebracht. Im Beispiel besteht dieses Substrat 5 aus Glas. Die Referenz 13 des Basiskörpers 3 ist ein wichtiger Bestandteil des erfindungsgemässen optischen Bauteils, da sie auf den Kippflächen des Schalters 31 aufliegt und die Orientierung des Substrates 5 festlegt. Im vorliegenden Beispiel wird diese Referenz 13 aus zwei Flächen gebildet. Diese Referenzflächen sind deutlich in Figur 1b in der Draufsicht dargestellt. Das Substrat 5 und insbesondere der Substratbereich 7 muss im optischen Bauteil 1 möglichst genau zu dieser Referenz 13 orientiert sein, um zu garantieren dass keine Nachjustage notwendig wird, um in der Schalterfunktion möglichst effizient Licht in den dafür vorgesehenen Lichtleiter zu koppeln. Um diese Genauigkeit zu erreichen, wird das unbeschichtete Substrat 5 mit dem Basiskörper 3 mittels einer Assemblierungsanordnung 17 zusammengefügt. Die assemblierte Komponente wird anschliessend zum fertiggestellten optischen Bauteil 1 beschichtet, wobei die Beschichtung 9 über das Substrat 5 hinaus Teile des Basiskörpers 3 bedeckt. Ziel der Beschichtung 9 ist es im Beispiel den Substratbereich 7 zu verspiegeln. In der Figur 1 ist diese Beschichtung 9 aus Gründen der Darstellung überproportional dick gezeichnet. Während typische Substratdicken im Millimeterbereich liegen, liegt die Dicke einer solchen Beschichtung 9 zur Verspiegelung üblicherweise im Mikrometerbereich.

Für die Beschichtung kann ein Vakuumbeschichtungsverfahren, wie zum Beispiel Materialverdampfungsverfahren oder Sputterverfahren angewandt werden. Es sind aber auch CVD (chemical vapour deposition) oder PECVD (plasma enhanced CVD)-Verfahren möglich. Vakuumbeschichtungsverfahren haben den Vorteil sehr flexibel gegenüber Änderungen der Spezifikationsanforderungen zu sein. Es lassen sich damit Spiegel mit hoher optischer Qualität erzeugen und wenn nötig sogar mit gezielten spektralen Eigenschaften. Vorteilhaft kann sich auch auswirken, dass bei solchen Beschichtungstechniken in der Regel von einer räumlich begrenzten Beschichtungsquelle aus beschichtet wird. Dies bedeutet, dass lediglich die der Quelle zugewandte Seite des optischen Bauteils 1 beschichtet wird und damit am Basiskörper 3 Bereiche vorgesehen sein können, die nicht beschichtet werden dürfen. Dies kann beispielsweise bei Basiskörpern eine Rolle spielen, die zur optischen und mechanischen Funktion zusätzlich auch noch elektrisch kontaktiert werden müssen. Bei Tauchverfahren wie zum Beispiel Sol-Gel-Verfahren wäre der gesamte Basiskörper 3 mit einem nicht leitenden Material überzogen und damit nur schwer elektrisch zu kontaktieren.

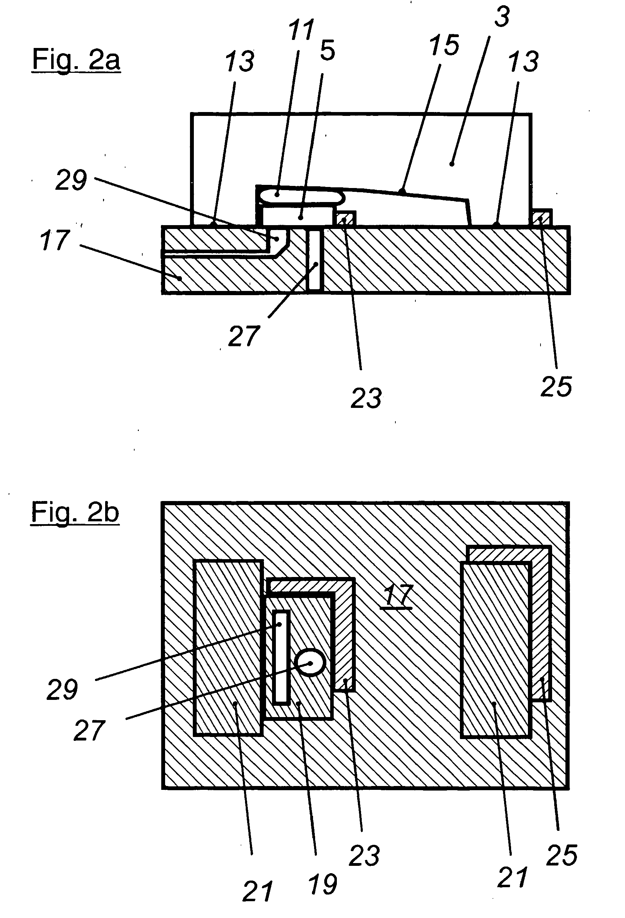

Die Beschichtung ist einer der letzten Schritte in der Prozesskette zur Herstellung des optischen Bauteils 1. Sämtliche Assemblierschritte werden an unbeschichteten Teilen vollzogen. Daher wird durch das Assemblieren kein Schichtsystem geschädigt und es kann die Assemblierungsanordnung 17, wie sie in Figur 2a im Querschnitt und in Figur 2b in der Draufsicht dargestellt ist, eingesetzt werden. Die Assemblierungsanordnung 17 besteht im wesentlichen aus einer Auflagefläche 19 und einem Gegenstück 21 zur Referenz 13 des Basiskörpers 3. Zum Assemblieren von Substrat 5 und Basiskörper 3 wird das Substrat 5 auf die Assemblierungsvorrichtung 17 so gelegt, dass der Substratbereich 7 und die Auflagefläche 19 in Kontakt sind. Auf das Substrat 5 wird nun ein Kleber, vorzugsweise ein optischer Kleber, aufgetragen und anschliessend der Basiskörper 3 mit der Referenz 13 auf das Gegenstück 21 zur Referenz gelegt, so dass sich eine Klebeschicht 11 zwischen der Substrataufnahmefläche 15 und dem Substrat 5 bildet, wie in Figur 2a dargestellt.

Um die Positionierung von Substrat 5 und Basiskörper 3 auf der Assemblierungsanordnung 17 zu vereinfachen, können an dieser Justagehilfen 23 für das Substrat 5 und Justagehilfen 25 für den Basiskörper 3 zum Beispiel in Form von Anschlägen vorgesehen sein an denen das Substrat 5 bzw. der Basiskörper 3 lateral ausgerichtet wird. In dieser Anordnung sind Basiskörper 3 und Substrat 5 dann zueinander starr positioniert und es hängt es lediglich von der Genauigkeit der Verarbeitung der Assemblierungsvorrichtung 17 ab, wie genau Substrat 5 und Referenz 13 zueinander orientiert sind. Liegt eine krummflächige Referenz 13 des Basiskörpers 3 vor so lassen sich für die Orientierung Winkelfehler kleiner 0.25 Grad realisieren. Bei einer planen Referenz 13 sind Winkelfehler kleiner 0.15 Grad realisierbar, wenn diese parallel zum Substratbereich 7 orientiert sein soll. Eine noch genauere, parallele Orientierung von Substrat 5 zu Referenz 13 wird möglich, wenn die Auflagefläche 19 der Assemblierungsvorrichtung 17 aus Quarz besteht und das Substrat 5 dort angesprengt werden kann. Vorraussetzung ist hierfür allerdings, dass der Substratbereich 7 aus einer polierten Glasoberfläche besteht. Für Substratgrössen von bis zu 1cm² werden damit Winkelfehler, erzielt die kleiner 0.033 Grad sind.

In der Figur 2 dargestellt ist die Ausführung einer Assemblierüngsanordung 17 für einen besonders einfachen Fall: Die Referenz 13 des Basiskörpers 3 besteht aus zwei planen Flächen die zusammen mit dem Substratbereich 7 in einer Ebene liegen. Für den optischen Schalter 31 im Beispiel hat dies den Vorteil, dass sich beim Schalten die Drehachse ebenfalls in dieser Ebene befindet und damit eine einfache Strahlumlenkung ermöglicht. Im allgemeinen Fall sind aber die unterschiedlichsten Geometrien für den Basiskörper 3 denkbar. So kann zum Beispiel am Basiskörper 3 selbst eine zylinderförmige Struktur vorgesehen sein die die mechanische Drehachse des Schaltelements bildet und als Referenz 13 für den Assemblierungsprozess geeignet ist.

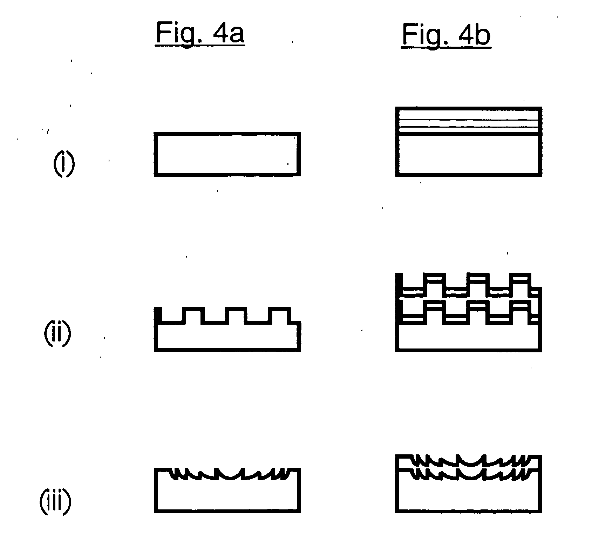

Auch für das Substrat 5 sind die unterschiedlichsten Ausführungen möglich. Dies bezieht sich sowohl auf die Substratgeometrie, bei der unter anderem gekrümmte Oberflächen und damit Linsen zugelassen sind, als auch auf die Beschaffenheit des Substratbereichs 7: Hier sind neben glatten Oberflächen auch strukturierte Oberflächen und insbesondere mikrostrukturierte Oberflächen, d.h. mit Strukturgrössen die im Mikrometerbereich, oder darunter liegen, denkbar. Die Figuren 4a und 4b zeigen drei unterschiedliche Ausführungsformen einer solchen Oberfläche: eine unstrukturierte Oberfläche (i), eine mit einem Beugungsgitter versehene Oberfläche (ii) und eine mit einer Fresnellinse versehene Oberfläche (iii). Gezeigt ist jeweils die unbeschichtete Oberfläche in Figur 4a. Figur 4b zeigt die beschichtete Oberfläche, wobei die Beschichtung erfindungsgemäss erst nach der Assemblierung an einen Basiskörper 3 appliziert wird. Liegt ein Substrat 5, mit einer strukturierten Oberfläche vor, so muss die Auflagefläche 19 der Assemblieranordung 17 dieser Struktur folgen. Dies lässt sich zum Beispiel dadurch realisieren, dass am Substrat mittels den bekannten Galvanisierungsverfahren eine typischerweise millimeterdicke metallische Schicht abgeschieden wird und dieses Replikat in die Assemblieranordnung eingearbeitet wird. Unter Umständen kann bei dieser Einarbeitung vor dem des Assemblieren davon abgesehen werden, das Substrat 5 von dem Replikat zu trennen.
Sowohl für strukturierte als auch für unstrukturierte Substrate 5 kann es von Vorteil sein an der Assemblierungsanordnung 17 eine Vorrichtung vorzusehen, die das Substrat 5 während des Assemblierens an der Auflagefläche 19 fixiert. Wie in Figur 2 gezeigt kann dies zum Beispiel mittels eines Gasdurchlasses 27 in der Assemblierungsanordnung 17 erfolgen. Dieser Gasdurchlass hat eine Öffnung im Bereich der Auflagefläche 19, die nach Ausrichtung des Substrates 5 durch dieses abgedeckt wird. Wird nun ein Unterdruck in diesen Gasdurchlass 27 erzeugt, so ist das Substrat fixiert. Eine ähnliche Vorrichtung ist auch für den Basiskörper 3 denkbar aber in den wenigsten Fällen notwendig.
Es ist ein Vorteil des erfindungsgemässen Verfahrens dass die Geometrie der Substrataufnahmefläche 15 des Basiskörpers, sowie die Geometrie des Bereichs des Substrats 5 der zur Verbindung des Substrats 5 mit dem Basiskörper 3 dient, eine untergeordnete Rolle spielt. Dies rührt daher, dass die Assemblierungsanordnung 17 für die richtige Orientierung des Substratbereichs 7 des Substrates 5 zur Referenz 13 des Basiskörpers 3 sorgt und die zum verkitten verwendete Klebeschicht 11 in der Lage ist, vorhandene Defekte oder gegebenenfalls einen Dickenverlauf des Zwischenraums zwischen Substrat 5 und Substrataufnahmefläche 15 auszugleichen.

Zum verkitten eignen sich unterschiedliche Kleber. Hier sind zum Beispiel Zweikomponentenkleber verfügbar. Allerdings muss mit dem Vermischen der beiden Komponenten der Assemblierprozess innerhalb kurzer Zeit stattfinden. Dies steht einer effizienten Automatisierung des Assemblierprozesses entgegen. Besonders vorteilhaft ist daher die Verwendung eines optischen Klebers der mittels ultraviolettem Licht (UV-Licht) aushärtet. Nach dem Zusammenfügen von Substrat'5 und Basiskörper 3 kann dieser dann mit UV-Licht bestrahlt und ausgehärtet werden. Für diese Bestrahlung kann in der Assemblierungsanordnung 17 eine Beleuchtungsvorrichtung 29 in Form zum Beispiel eines Lichttunnels wie in Figur 2 gezeigt, vorgesehen sein. Besteht das Substrat 5 aus transparentem Material, so kann dieser Lichtleiter an der Auflagefläche 19 der Assemblieranordnung 17 enden. Hier ist abermals von Vorteil dass das Substrat 5 noch nicht beschichtet ist, da der optische Kleber ungehindert durch dieses hindurch ausgehärtet werden kann. Bei einer transparenten Assemblierungsanordung 17 kann ohne weiter Massnahmen durch diese hindurch ausgehärtet werden. Gegebenenfalls kann der Gasdurchlass 27 als Lichttunnel ausgebildet sein und zur Aushärtung genutzt werden.
Nach dem Assemblieren erhält das optische Bauteil und damit der Substratbereich 7 eine Beschichtung. Dies führt dazu dass im Substratbereich 7 eine optisch funktionelle Oberfläche entsteht, d.h. die Oberfläche hat eine optische Funktion. Fällt Licht auf eine solche Oberfläche so wird dies entsprechend der optischen Funktion reflektiert, transmittiert, absorbiert, gebrochen oder gebeugt. Entprechend kann es sich bei der optisch funktionellen Oberfläche um einen Spiegel, einen Farbfilter, um einen Polarisationsstrahlteiler, um eine Linse oder ganz allgemein um eine Beugungsstruktur handeln.

## Patentansprüche

1. Optisches Bauteil, mit einem Basiskörper (3) und einem Substrat (5) mit optisch funktionellem Substratbereich (7), mit einer Vakuumbeschichtung (9), welche sich vom optisch funktionellen Substratbereich (7) auf den Basiskörper erstreckt, wobei der Basiskörper (3) U-förmig ist und zwei beabstandete Referenzflächen (13) mit dazwischenliegender Substrataufnahmefläche (15) aufweist, an welcher das Substrat am Basiskörper (3) fixiert und zu den Referenzflächen (13) ausgerichtet ist.

2. Optisches Bauteil (1) nach Anspruch 1, wobei die Orientierung des Substratbereichs (7) um nicht mehr als 0.25 Grad von einer relativ zu den Referenzflächen (13) wählbaren Orientierung abweicht.

3. Optisches Bauteil (1) nach einem der Ansprüche 1 und 2, wobei der Substratbereich (7) plan ist und die Referenzflächen (13) aus planen Flächen am Basiskörper (3) bestehen, wobei sämtliche Referenzflächen (13) zueinander und zum Substratbereich (7) innerhalb der Winkeltoleranz von 0.15 Grad, vorzugsweise innerhalb der Winkeltoleranz von 0.033 Grad parallel sind.

4. Optisches Bauteil (1) nach Anspruch 3, wobei die Referenzflächen (13) und der Substratbereich (7) in einer Ebene liegen.

5. Optisches Bauteil (1) nach einem der Ansprüche 1 bis 4, wobei das Substrat (5) Glas zumindest enthält, insbesondere ein Glassubstrat mit einer strukturierten Oberfläche enthält.

6. Optisches Bauteil (1) nach einem der Ansprüche 1 bis 5, wobei der Substratbereich (7) als Spiegel, Farbfilter, Polarisationsstrahlteiler oder Beugungsstruktur ausgebildet ist.

7. Optischer Schalter (31), der ein optisches Bauteil (1) nach einem der Ansprüche 1 bis 6 enthält.

8. Verfahren zur Herstellung eines optischen Bauteiles (1) mit folgenden Schritten
a) Anfertigen eines U-förmigen Basiskörpers (3) mit zwei beabstandeten Referenzflächen (13) und dazwischenliegender Substrataufnahmefläche (15)
b) Anfertigen eines Substrates (5) mit Substratbereich (7),
c) Ausrichten von Substrat (5) und Referenzflächen (13) des Basiskörpers (3) mittels einer Assembliervorrichtung (17)
d) Fixieren vom Substrat (5) an der Substrataufnahmefläche (15)
e) Beschichten des Substratbereichs (7) und zumindest Teilen des Basiskörpers (3) mit einem Vakuumbeschichtungsverfahren derart, dass sich die Beschichtung (9) vom optisch funktionellen Substratbereich (7) auf den Basiskörper erstreckt.

9. Verfahren nach Anspruch 8, wobei zum Zusammenfügen des Substrates (5) und des Basiskörpers (3) eine Assemblierungsanordnung (17) eingesetzt wird, die eine Auflagefläche (19) enthält, mit der der Substratbereich (7) in Kontakt gebracht wird und die Assemblierungsanordnung (17) ein Gegenstück (21) zu den Referenzflächen (13) enthält, mit dem die Referenzflächen (13) des Basiskörpers (3) in Kontakt gebracht werden, wobei die Auflagefläche (19) und das Gegenstück (21) zumindest während des Zusammenfügens von Substrat (5) und Basiskörper (3) relativ zueinander starr sind und der Substratbereich (7) und die Referenzflächen (13) des Basiskörpers (3) in durch die Assemblierungsanordnung (17) vorbestimmter Weise zueinander angeordnet sind.

10. Verfahren nach Anspruch 9, wobei mittels einer ersten, an der Assemblierungsanordnung (17) vorgesehenen Justagehilfe (23) das Substrat (5) auf der Auflagefläche (19) ausgerichtet wird und gegebenenfalls an einer zweiten, an der Assemblierungsanordung (17) vorgesehenen Justagehilfe (25) die Referenzflächen (13) des Basiskörpers (3) auf dem Gegenstück (21) ausgerichtet werden.

11. Verfahren nach einem der Ansprüche 9 und 10, wobei bei der Anfertigung des Substrates (5) in mindestens einem Teilbereich des Substratbereichs (7) eine polierte Glasoberfläche erzeugt wird und das Zusammenfügen von Substrat (5) und Basiskörper (3) mit einer Assemblierungsanordnung (17) vollzogen wird, die mindestens im Bereich der Auflagefläche (19) aus Quarz besteht an das die polierte Glasoberfläche des Substratbereichs (7) angesprengt wird.

12. Verfahren nach einem der Ansprüche 9 und 10, wobei in einem Gasdurchlass (27), der im Bereich der Auflagefläche (19) in der Assemblierungsanordnung (17) vorgesehen ist, nach Kontaktieren des Substratbereichs (7) mit der Auflagefläche (19), ein Unterdruck im Vergleich zur die Assemblierungsanordnung (17) umgebenden Atmosphäre aufgebaut wird und **dadurch** das Substrat (5) während des Zusammenfügens mit dem Basiskörper (3) an der Auflagefläche (19) fixiert wird.

13. Verfahren nach einem der Ansprüche 9 bis 12, wobei für das Zusammenfügen des Substrates (5) und des Basiskörpers (3) eine Klebeschicht (11), vorzugsweise ein UV-härtende Klebeschicht, eingesetzt wird die den zwischen dem Substrat (5) und der Substrataufnahmefläche (15) des Basiskörpers (3) vorhandenen Zwischenraum mindestens teilweise ausfüllt und gegebenenfalls einen Dickenverlauf des Zwischenraumes fixiert.

14. Verfahren nach einem der Ansprüche 9 bis 13, wobei das Substrat (5) und der Basiskörper (3) mittels eines UVhärtenden Klebers zusammengefügt werden und das Substrat (5) durch die Assemblierungsanordnung (17) oder durch eine in der Assemblierungsanordnung (17) vorgesehene Beleuchtungsvorrichtung (29) oder gegebenenfalls durch den Gasdurchlass (27) beleuchtet wird, so dass der Kleber **dadurch** ausgehärtet wird.

## Claims

1. Optical component (1) with a base body (3) and a substrate (5) with an optically functional substrate region (7), with a vacuum coating (9) which extends from the optically functional substrate region (7) to the base body, the base body (3) being U-shaped and having two spaced reference surfaces (13) with substrate receiver surface (15) in between, at which the substrate is fixed to the base body (13) and aligned to the reference surfaces (13).

2. Optical component (1) according to claim 1, wherein the orientation of the substrate region (7) deviates by no more than 0.25 degrees from an orientation that is selectable relative to the reference surfaces (13) .

3. Optical component (1) according to one of claims 1 and 2, wherein the substrate region (7) is planar and the reference surfaces (13) comprise plane surfaces on the base body (3), where all reference surfaces (13) are parallel to one another and to the substrate region (7) within an angular tolerance of 0.15 degrees, preferably within an angular tolerance of 0.033 degrees.

4. Optical component (1) according to claim 3, wherein the reference surfaces (13) and the substrate region (7) lie in one plane.

5. Optical component (1) according to any of claims 1 to 4, wherein the substrate (5) at least comprises glass, in particular comprises a glass substrate with a structured surface.

6. Optical component (1) according to any of claims 1 to 5, wherein the substrate region (7) is formed as a mirror, a colour filter, a polarising beam splitter or a diffractive structure.

7. Optical switch (31) containing an optical component (1) according to any of claims 1 to 6.

8. Method for production of an optical component (1) with the following steps:
a) production of a U-shaped base body (3) with two spaced reference surfaces (13) and substrate receiver surface (15) in between;
b) production of a substrate (5) with substrate region (7);
c) alignment of the substrate (5) and the reference surfaces (13) of the base body (3) by means of an assembly device (17);
d) fixing of the substrate (5) to the substrate receiver surface (15);
e) coating of the substrate region (7) and at least parts of the base body (3) with a vacuum coating process such that the coating (19) extends from the optically functional substrate region (7) to the base body.

9. Method according to claim 8, wherein for joining the substrate (5) and the base body (3), an assembly device (17) is used that contains a support surface (19) with which the substrate region (7) is brought into contact, and the assembly device (17) contains a counterpart (21) for the reference surfaces (13) with which the reference surfaces (13) of the base body are brought into contact, the support surface (19) and the counterpart (21) being rigid in relation to each other at least during the joining of the substrate (5) and base body (3), and the substrate region (7) and the reference surfaces (13) of the base body (3) are arranged relative each other in a manner predefined by the assembly device (17).

10. Method according to claim 9, wherein by means of a first adjustment aid (23) provided on the assembly device (17) the substrate (5) is aligned on the support surface (19) and where applicable at a second adjustment aid (25) provided on the assembly device (17), the reference surfaces (13) of the base body (3) are aligned on the counterpart (21).

11. Method according to one of claims 9 and 10, wherein during production of the substrate (5), in at least a part area of the substrate region (7) a polished glass surface is generated and the joining of the substrate (5) and base body (3) is performed with an assembly device (17) which at least in the region of the support surface (19) comprises quartz, to which the polished glass surface of the substrate region (7) is moulded.

12. Method according to one of claims 9 and 10, wherein upon contact between the substrate region (7) and the support surface (19), in a gas port (27) provided in the region of the support surface (19) in the assembly device (17), a reduced pressure is created in comparison with ambient atmospheric pressure around the assembly device (17) and thus, during joining with the base body (3), the substrate (5) is fixed to the support surface (19).

13. Method according to any of claims 9 to 12, wherein for joining of the substrate (5) and the base body (3) an adhesive layer (11) is used, preferably a UV-curing adhesive layer, which at least partly fills a space between the substrate (5) and a substrate receiving surface (15) of the base body (3) and where applicable fixes a thickness development of the space.

14. Method according to any of claims 9 to 13, wherein the substrate (5) and the base body (3) are joined by means of a UV-curing adhesive and the substrate (5) is illuminated by the assembly device (17) or by a lighting device (29) provided in the assembly device (17) or where applicable through the gas port (27) so that the adhesive is cured.

## Revendications

1. Composant optique, comprenant un corps de base (3) et un substrat (5) doté d'une zone de substrat optiquement fonctionnelle (7), un revêtement (9) déposé sous vide qui s'étend de la zone de substrat optiquement fonctionnelle (7) jusque sur le corps de base, le corps de base (3) ayant la forme d'un U et comportant deux surfaces de référence (13) qui sont placées à distance l'une de l'autre et entre lesquelles se trouve une surface de réception de substrat (15) au niveau de laquelle le substrat est fixé au corps de base (3) et est orienté par rapport aux surfaces de référence (13).

2. Composant optique (1) selon la revendication 1, dans lequel l'orientation de la zone de substrat (7) ne s'écarte pas plus de 0,25° d'une orientation pouvant être sélectionnée par rapport aux surfaces de référence (13).

3. Composant optique (1) selon l'une des revendications 1 et 2, dans lequel la zone de substrat (7) est plane et les surfaces de référence (13) sont constituées de surfaces planes au niveau du corps de base (3), les surfaces de référence (13) étant parallèles l'une à l'autre et à la zone de substrat (7) avec une tolérance angulaire de 0,15° avantageusement une tolérance angulaire de 0,033°.

4. Composant optique (1) selon la revendication 3, dans lequel les surfaces de référence (13) et la zone de substrat (7) sont situées dans un plan.

5. Composant optique (1) selon l'une des revendications 1 à 4, dans lequel le substrat (5) contient au moins un verre, notamment un substrat de verre ayant une surface structurée.

6. Composant optique (1) selon l'une des revendications 1 à 5, dans lequel la zone de substrat (7) est conformée en miroir, en filtre coloré, en séparateur de faisceau de polarisation ou en structure de diffraction.

7. Circuit optique (31), qui contient un composant optique (1) selon l'une des revendications 1 à 6.

8. Procédé de fabrication d'un composant optique (1), comprenant les étapes suivantes consistant à :
a) réaliser un corps de base (3) en forme de U comportant deux surfaces de référence (13) qui sont situées à distance l'une de l'autre et entre lesquelles se trouve une surface de réception de substrat (15),
b) réaliser un substrat (5) doté d'une zone de substrat (7),
c) orienter le substrat (5) et les surfaces de référence (13) du corps de base (3) au moyen d'un dispositif d'assemblage (17),
d) fixer le substrat (5) à la surface de réception de substrat (15),
e) revêtir la zone de substrat (7) et au moins des parties du corps de base (3) au moyen d'un procédé de revêtement sous vide, de telle sorte que le revêtement (9) s'étende de la zone de substrat optiquement fonctionnelle (7) jusque sur le corps de base.

9. Procédé selon la revendication 8, dans lequel, pour assembler le substrat (5) et le corps de base (3), on utilise un dispositif d'assemblage (17) qui présente une surface d'appui (19) avec laquelle la zone de substrat (7) est amenée en contact et le dispositif d'assemblage (17) contient une contre-pièce (21), par rapport aux surfaces de référence (13), avec laquelle les surfaces de référence (13) du corps de base (3) sont amenées en contact, la surface d'appui (19) et la contre-pièce (21) étant rigides l'une par rapport à l'autre au moins pendant l'assemblage du substrat (5) et du corps de base (3), et la zone de substrat (7) et les surfaces de référence (13) du corps de base (3) étant disposées l'une par rapport à l'autre d'une façon prédéterminée par le dispositif d'assemblage (17).

10. Procédé selon la revendication 9, dans lequel un premier accessoire de réglage (23) prévu au niveau du dispositif d'assemblage (17) permet d'orienter le substrat (5) sur la surface d'appui (19) et éventuellement un deuxième accessoire de réglage (25) prévu au niveau du dispositif d'assemblage (17) permet d'orienter les surfaces de référence (13) du corps de base (3) sur la contre-pièce (21).

11. Procédé selon l'une des revendications 9 et 10, dans lequel une surface de verre poli est réalisée dans au moins une partie de la zone de substrat (7) lors de la fabrication du substrat (5), et l'assemblage du substrat (5) et du corps de base (3) est effectué au moyen d'un dispositif d'assemblage (17) qui est constitué, au moins au niveau de la surface d'appui (19), à partir de quartz auquel est accolée la surface de verre poli de la zone de substrat (7).

12. Procédé selon l'une des revendications 9 et 10, dans lequel une dépression par rapport à l'atmosphère entourant le dispositif d'assemblage (17) est générée, après mise en contact de la zone de substrat (7) avec la surface d'appui (19), dans un passage de gaz (27) qui est ménagé au niveau de la surface d'appui (19) dans le dispositif d'assemblage (17), et permet de fixer le substrat (5) à la surface d'appui (19) pendant l'assemblage avec le corps de base (3).

13. Procédé selon l'une des revendications 9 à 12, dans lequel une couche adhésive (11), avantageusement une couche adhésive durcissant aux UV, est utilisée pour assembler le substrat (5) et le corps de base (3), ladite couche adhésive remplissant au moins partiellement l'interstice ménagé entre le substrat (5) et la surface de réception de substrat (15) du corps de base (3) et fixant éventuellement la dimension de l'interstice.

14. Procédé selon l'une des revendications 9 à 13, dans lequel le substrat (5) et le corps de base (3) sont assemblés au moyen d'un adhésif durcissant aux UV, et dans lequel le substrat (5) est éclairé par le dispositif d'assemblage (17) ou par un dispositif d'éclairage (29), prévu dans le dispositif d'assemblage (17), ou le cas échéant à travers le passage de gaz (27), de façon à durcir d'adhésif.
